# EUROPÄISCHE PATENTSCHRIFT

(11) **EP 1 468 173 B1**
(45) Veröffentlichungstag und Bekanntmachung des Hinweises auf die Patenterteilung: **21.03.2007**
(21) Anmeldenummer: 03729406.3
(22) Anmeldetag: 07.01.2003
(51) Int. Cl.: F02B 39/10, F02B 37/04, F02B 37/12

(54) **VERFAHREN ZUR ANSTEUERUNG EINES ELEKTRISCH ANGETRIEBENEN VERDICHTERS**
METHOD FOR CONTROLLING AN ELECTRICALLY DRIVEN COMPRESSOR
PROCEDE POUR COMMANDER UN COMPRESSEUR A ENTRAINEMENT ELECTRIQUE

(30) Priorität: 21.01.2002 DE 10202146
(43) Veröffentlichungstag der Anmeldung: 20.10.2004
(73) Patentinhaber: SIEMENS AKTIENGESELLSCHAFT, 80333 München (DE)
(72) Erfinder: ELLMER, Dietmar, 93057 Regensburg (DE); STÜRTZ, Michael, 93059 Regensburg (DE); TEINER, Markus, 93057 Regensburg (DE)
(86) Internationale Anmeldenummer: PCT/DE2003/000018
(87) Internationale Veröffentlichungsnummer: WO 2003/060298

(56) Entgegenhaltungen:
- WO-A-00/47879
- WO-A-97/18388
- DE-A- 10 023 022
- BARTSCH C: "ELEKTRISCHER ANTRIEB FUER ABGASTURBOLADER" ANTRIEBSTECHNIK, KRAUSSKOPF VERLAG FUR WIRTSCHAFT GMBH. MAINZ, DE, Bd. 38, Nr. 9, September 1999 (1999-09), Seiten 57-59, XP000860787 ISSN: 0722-8546

## Beschreibung

Die Erfindung betrifft ein Verfahren zur Ansteuerung eines elektrisch angetriebenen Verdichters in einer Brennkraftmaschine mit einem Abgasturbolader (ATL).

Zur Leistungssteigerung von Brennkraftmaschinen werden Abgasturbolader eingesetzt, die die Ansaugluft verdichten, um den Luftdurchsatz des Motors zu erhöhen.

Ein Nachteil eines Abgasturboladers liegt darin, daß ein gewisser Abgasmassenstrom erforderlich ist, um die erforderliche Turbinenleistungen abzugeben. Ein weiterer Nachteil des Turboladers liegt darin, daß das Laufzeug zunächst beschleunigt werden muß, bevor der erforderliche Arbeitspunkt erreicht wird. Diese Nachteile des Abgasturboladers führen zu dem sogenannten "Turboloch", das sich bei positiven Lastsprüngen in einer Verzögerung äußert.

Um das Turboloch zu kompensieren, ist es bekannt, zusätzlich zu dem Abgasturbolader einen elektrisch angetriebenen Verdichter, sogenannter E-Booster, einzusetzen. Hierbei handelt es sich um eine Verdichterturbine, die durch einen Elektromotor angetrieben wird und zusätzlich die Luft verdichtet.

Aus DE 100 23 022 ist bekannt, einen elektrischen Zusatzverdichter bei bestimmten Betriebszuständen dem Abgasturbolader einzuschalten. Der elektrische Zusatzverdichter wird abgeschaltet, nachdem der Abgasturbolader den geforderten Ladedruck aufgebaut hat. Eine Regelung des elektrischen Zusatzverdichters erfolgt abhängig von Kennwerten des Motorbetriebszustandes.

Der Erfindung liegt die Aufgabe zugrunde ein Verfahren zur Ansteuerung eines elektrisch angetriebenen Verdichters bereitzustellen, bei dem mit minimaler Leistung für dessen elektrischen Antrieb der Verdichter zugeschaltet wird.

Die erfindungsgemäße Aufgabe wird durch ein Verfahren mit den Merkmalen aus Anspruch 1 gelöst. Vorteilhafte Weiterführungen bilden den Gegenstand der Unteransprüche.

Bei dem erfindungsgemäßen Verfahren bestimmt ein Turbinenmodell eine momentan verfügbare Turbinenleistung. Ein Verdichtermodell bestimmt die momentan geforderte Verdichterleistung. Wenn die geforderte Verdichterleistung größer als die verfügbare Turbinenleistung ist, wird in einem inversen Verdichtermodell ein durch den elektrischen Verdichter zu erzeugender Druck bestimmt. In einer Laderegelung wird unter Verwendung des durch den elektrisch angetriebenen Verdichters zu erzeugenden Drucks die erforderliche Leistung für den Verdichter bestimmt. Der elektrisch angetriebene Verdichter wird durch eine Steuerung entsprechend seiner geforderten Leistung angesteuert. Bei dem erfindungsgemäßen Verfahren erfolgt ein Zuschalten des elektrisch angetriebenen Verdichters nur dann, wenn die momentan verfügbare Turbinenleistung des Abgasturboladers nicht ausreicht. Bei dem erfindungsgemäßen Verfahren wird aufgrund einer Leistungsbilanz des Abgasturboladers und des elektrisch angetriebenen Verdichters ein Zuschalten gesteuert.

Als ein weiteres Merkmal des erfindungsgemäßen Verfahrens ist eine Ladedruckregelung vorgesehen, die in dem Fall, daß der elektrisch angetriebene Verdichter zugeschaltet ist, die Turbine mit Maximalleistung ansteuert und den Ladedruck über die Einstellung der elektrischen Verdichterleistung steuert. Mit dieser Ladedruckregelung wird sichergestellt, daß der elektrisch angetriebene Verdichter in seinem zugeschalteten Zustand stets mit minimaler Leistung zugeschaltet ist. Gleichzeitig wird das Auftreten des "Turbolochs" verhindert.

Die Ladedruckregelung erfolgt bevorzugt jeweils über einen PID-Regler für die Turbine des Abgasturboladers und für den elektrisch angetriebenen Verdichter.

Bevorzugt bestimmt die Ladedruckregelung die Sollwerte für die Turbinenleistung und für die Leistung des elektrisch angetriebenen Verdichters sowie ein Signal dafür, ob der elektrisch angetriebene Verdichter zugeschaltet ist.

Das Turbinenmodell bestimmt bevorzugt die momentan verfügbare Turbinenleistung abhängig von dem Abgasmassenstrom aus dem Motor, einer Turbinendrehzahl und einer Abgastemperatur.

Das Verdichtermodell bestimmt bevorzugt die Sollwerte für die momentan geforderte Leistung der Turbine des Abgasturboladers und des elektrisch angetriebenen Verdichters. Diese Werte werden in dem Verdichtermodell vorzugsweise abhängig von dem Luftmassenstrom, dem Umgebungsdruck, der Ansauglufttemperatur vor dem Verdichter, der maximalen Verdichterleistung und dem momentanen Ladedruck bestimmt.

Als Wert für den Luftmassenstrom wird der Sollwert für den Luftmassenstrom angesetzt sowie für den Ladedruck der Sollwert für den momentanen Ladedruck.

Das inverse Modell für den elektrisch angetriebenen Verdichter bestimmt abhängig von dem Druck-Sollwert des elektrisch angetriebenen Verdichters, dem Umgebungsdruck, dem Luftmassenstrom und der Ansauglufttemperatur vor dem elektrisch angetriebenen Verdichter den Leistungssollwert für den elektrisch angetriebenen Verdichter. Bevorzugt verwendet das inverse Modell für den elektrisch angetriebenen Verdichter als Luftmassenstrom den Sollwert für den Luftmassenstrom.

Zusätzlich kann ein inverses Turbinenmodell vorgesehen sein, das den Sollwert für den Druckquotienten über der Turbine des Abgasturboladers und den Sollwert für den Abgasmassenstrom durch die Turbine bestimmt. Das inverse Turbinenmodell bestimmt den Sollwert für den Abgasmassenstrom durch die Turbine und den Sollwert für den Druckquotienten über der Turbine abhängig von dem Sollwert für die Turbinenleistung, der Turbinendrehzahl, der Abgastemperatur vor der Turbine, dem Sollwert für die Turbinenleistung und abhängig davon, ob der elektrisch angetriebene Verdichter zugeschaltet wurde oder nicht.

Bevorzugt ist als elektrisch angetriebener Verdichter ein E-Booster vorgesehen, der stromaufwärts von der Turbine des Abgasturboladers angeordnet ist.

Das erfindungsgemäße Verfahren kann bei jeder Art von Registerladung eingesetzt werden, bei der eine Verdichtung durch Zuschalten eines elektrischen Verbrauchers erfolgt.

Das erfindungsgemäße Verfahren wird anhand der nachfolgenden Figuren näher beschrieben. Es zeigt:
- Fig. 1: eine schematische Übersicht einer Registeraufladung mit einem elektrisch angetriebenen Verdichter,
- Fig. 2: eine schematische Ansicht der Ladedruckregelung,
- Fig. 3: eine schematische Systemübersicht und
- Fig. 4: eine schematische Ansicht der Koordination der Ladedruckregelung.

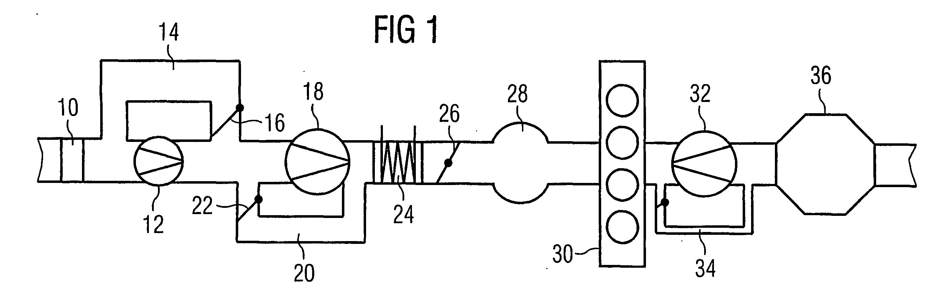

Fig. 1 zeigt ein schematisches Übersichtsbild einer Registeraufladung mit E-Booster als elektrisch angetriebener Verdichter. Der dargestellte Strömungsweg beginnt mit einem Luftfilter 10. Stromabwärts von dem Luftfilter 10 ist ein E-Booster 12 vorgesehen. Parallel zu dem E-Booster 12 liegt ein Bypass-Kanal 14, in dem eine ansteuerbare Klappe 16 angeordnet ist. Damit der elektrisch angetriebene Verdichter 12 schnell anspricht und verzögerungsfrei den erforderlichen Druck zur Verfügung stellt, ist dieser klein ausgelegt. Um bei einem kleinen Verdichter einen ausreichenden Luftmassenstrom zu erzielen, ist der Bypass-Kanal 14 vorgesehen.

Stromabwärts von dem E-Booster 12 ist ein Verdichter 18 eines Abgasturboladers vorgesehen. Parallel zum Verdichter 18 ist ein Umluftkanal 20 mit einer ansteuerbaren Klappe 22 angeordnet. Der Umluftkanal 20 wird zum Schutz des Abgasturboladers zeitweise geöffnet, um bei einem entsprechenden Druckquotienten über dem Verdichter 18 des Abgasturboladers Luft im Kreis zu pumpen.

Stromabwärts vom Verdichter 18 des Abgasturboladers ist ein Ladeluftkühler 24 vorgesehen. An den Ladeluftkühler 24 schließen sich eine Drosselklappe 26, eine Ansaugleitung 28 und Zylinder 30 der Brennkraftmaschine an.

Weiter stromabwärts ist eine Turbine 32 des Abgasturboladers schematisch dargestellt. Parallel zu der Turbine 32 des Abgasturboladers ist ein sogenanntes Wastegate 34 eingezeichnet, das den Luftstrom durch die Turbine 32 steuert. Stromabwärts erfolgt eine Konvertierung in einem schematisch dargestellten Katalysator 36.

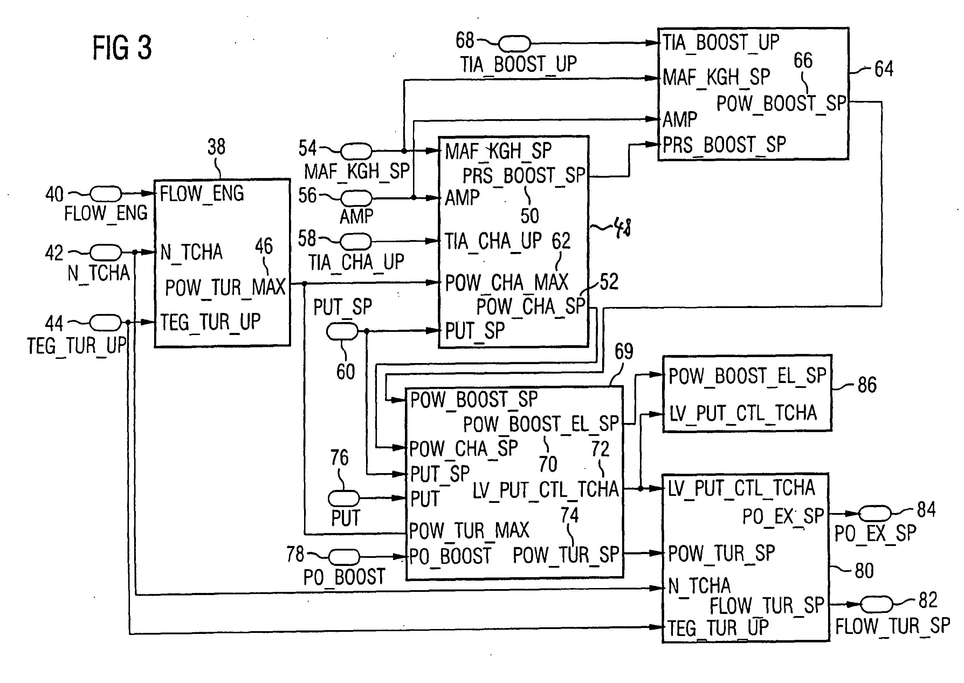

Fig. 3 zeigt eine schematische Übersicht, in der das erfindungsgemäße Verfahren durch einzelne Modellblöcke angezeigt wird. An dem Turbinenmodell 38 liegen als Eingangsgrößen der Abgasmassenstrom aus dem Motor 40 (FLOW_ENG), die Turboladerdrehzahl 42 (N_TCHA) und die Abgastemperatur vor der Turbine 44 (TEG_TUR_UP) an. Das Turbinenmodell 38 berechnet aus diesen Größen die maximale Turbinenleistung 46 (POW_TUR_MAX), das ist die Bruttoleistung der Turbine unter Berücksichtigung des Wirkungsgrades.

Ein Verdichtermodell 48 berechnet den Sollwert 50 für den Druck am E-Booster (PRS_BOOST_SP). Ebenfalls berechnet das Verdichtermodell 48 den Sollwert 52 für die Verdichterleistung (POW_CHA_SP). Eingangsgrößen für das Verdichtermodell 48 sind der Sollwert für den Luftmassenstrom 54 (MAF_KGH_SP), der Umgebungsdruck 56 (AMP), die Ansauglufttemperatur 58 vor Verdichter des Abgasturboladers (TIA_CHA_UP) und der Sollwert 60 für den Ladedruck (PUT_SP). Die maximale Turbinenleistung 46 liegt ebenfalls als maximale Leistung (POW_CHA_MAX) des Verdichters des Abgasturboladers 62 an dem Verdichtermodell 48 als Eingangsgröße an.

Das inverse Modell für den E-Booster 64 bestimmt den Sollwert für die Boosterleistung 66. Als Eingangsgröße an dem inversen Modell für den E-Booster liegen der Umgebungsdruck 56 (AMP), der Sollwert für den Luftmassenstrom 54 (MAF_KGH_SP), die Ansauglufttemperatur 68 vor dem E-Booster (TIA_BOOST_UP) und der Sollwert für den Booster-Druck (PRS_BOOST_SP) 50 an.

Eine Ladedruckregelung ist schematisch in Fig. 3 als Block 69 dargestellt. Die Ladedruckregelung bestimmt als Ausgangsgröße den Sollwert für die Boosterleistung 70 (POW_BOOST_EL_SP) ein Flag 72 für den Zustand der Ladedruckregelung (LV_PUT_CTL_TCHA) und einen Sollwert 74 für die Turbinenleistung (POW_TUR_SP). Die Ladedruckregelung 69 besitzt als Eingangsgröße den Sollwert der Boosterleistung 66 aus dem inversen Modell, den Sollwert für die Verdichterleistung 52 des Abgasturboladers aus dem Verdichtermodell 48, den Sollwert für den Ladedruck 60, den Ladedruck 76 (PUT) und den Druckquotienten am E-Booster 78 (PQ_BOOST). Der Druckquotient 78 ist der Quotient aus dem Druck nach dividiert durch den Druck vor dem Booster.

Die Ausgangsgrößen der Ladedruckregelung liegen an dem inversen Modell für die Turbine 80 an. An dem inversen Turbinenmodell liegt als Eingangsgröße das Flag für den Zustand der Ladedruckregelung 72 (LV_PUT_CTL_TCHA) und der Sollwert für die Turbinenleistung 74 an. Ferner liegen an dem inversen Turbinenmodell 80 die Turboladerdrehzahl 42 und die Abgastemperatur vor der Turbine 44 an. Als Ausgangsgrößen des inversen Turbinenmodells werden der Sollwert für den Abgasmassenstrom durch die Turbine 82 und der Sollwert für den Druckquotienten über der Turbine 84 (PQ_EX_SP) berechnet.

Die Steuerung des E-Boosters erfolgt durch die Boostersteuerung 86, an der ebenfalls das Flag für Zustand der Ladedruckregelung 72 und zusätzlich der Sollwert für die Boosterleistung 70 anliegen.

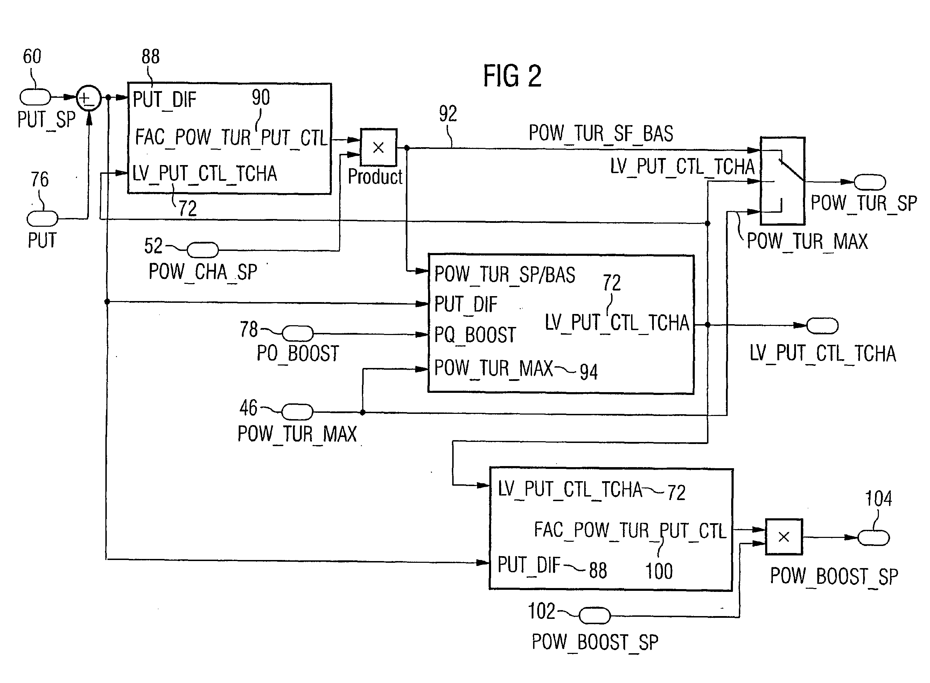

Fig. 2 zeigt die Ladedruckregelung 69 im Detail. Ausgehend von dem Sollwert für den Ladedruck 60 und dem Istwert für den Ladedruck 76 wird die Differenz gebildet als Sollwert minus Istwert. Die Abweichung des Ladedrucks vom Sollwert für den Ladedruck 88 (PUT_DIF) wird gemeinsam mit dem Flag für den Zustand der Ladedruckregelung 72 (LV_PUT_CTL_TCHA) zu einem Faktor für die Turbinenleistung 90 (FAC_POW_TUR_PUT_CTL) verarbeitet. Der Faktor wird mit dem Sollwert für die Turbinenleistung 52 multipliziert. Das Produkt wird als Basiswert für Sollwert der Turbinenleistung 92 weitergeleitet.

An einer Koordination der Ladedruckregelung 94 liegt der Basiswert für den Sollwert der Turbinenleistung 92 an. Ferner erfolgt die Koordination der Ladedruckregelung 94 abhängig von dem Druckquotienten am Booster 78 und der maximalen Turbinenleistung 46. Die Ausgangsgröße der Koordination der Ladedruckregelung 94 ist das Flag für den Zustand der Ladedruckregelung 72, das den Wert 1 annimmt wenn der Booster abgeschaltet ist und den Wert 0 annimmt wenn die Maximalleistung der Turbine angefordert wird.

Die Regelung der Leistung des Boosters erfolgt analog zu der Bestimmung des Basiswerts für den Sollwert der Turbinenleistung. Abhängig von dem Zustand der Ladedruckregelung und der Regelabweichung des Ladedrucks 88 wird ein Faktor für die Turbinenleistung 100 (FAC_POW_TUR_PUT_CTL) bestimmt und mit dem Sollwert für die Boosterleistung 102 multipliziert. Das Produkt wird als Sollwert für die Boosterleistung 104 (POW_BOOST_EL_SP) weitergeleitet.

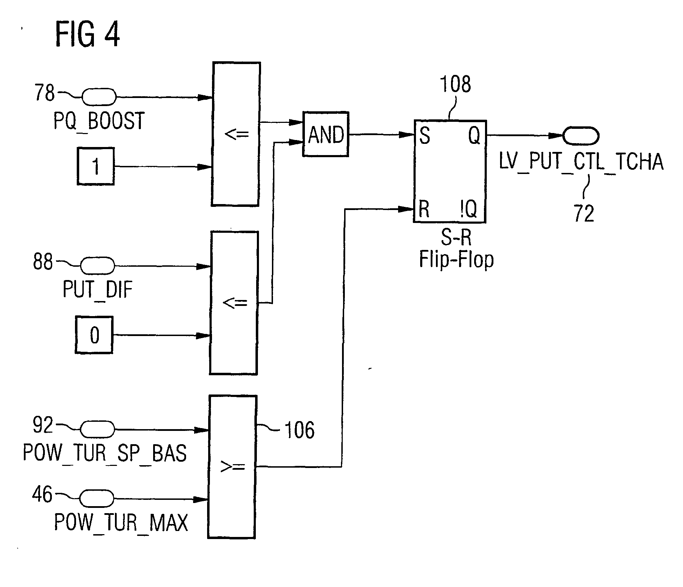

Fig. 4 zeigt eine mögliche Ausführung für die Koordination der Ladedruckregelung. Im untersten Zweig wird der Basiswert für den Sollwert der Turbinenleistung mit der maximalen Leistung der Turbine 46 verglichen. An der Komperator 106 erzeugt eine 1, wenn der Basiswert für den Sollwert der Turbinenleistung größer gleich der maximalen Turbinenleistung ist. Das Ausgangssignal des Komperators 106 liegt an einem S-R Flip-Flop 108 an dem Reset-Eingang an. An dem S-Eingang des Flip-Flops 108 liegt die Undverknüpfung aus zwei Vergleichen an. Zunächst wird verglichen, ob der Druckquotient am Booster 78 kleiner gleich 1 ist. Wenn dies der Fall ist erfolgt kein Druckaufbau durch den Booster. Als zweite Größe wird verglichen, ob die Regelabweichung des Ladedrucks 88 kleiner gleich 0 ist. Die Regelabweichung wird, wie oben bereits erwähnt, als Differenz aus Sollwert minus Istwert gebildet, so daß eine negative Regelabweichung anzeigt, daß der Istwert größer als der Sollwert ist. Das Statusbit 72 (LV_PUT_CTL_TCHA) wird an dem Ausgang des S-R Flip-Flops 108 erzeugt.

## Patentansprüche

1. Verfahren zur Ansteuerung eines elektrisch angetriebenen Verdichters (12) in einer Brennkraftmaschine mit einem Abgasturbolader (18, 32), **gekennzeichnet durch** folgende Verfahrensschritte:
- ein Turbinenmodell (38) bestimmt eine momentan verfügbare Turbinenleistung (POW_TUR_MAX),
- ein Verdichtermodell (48) bestimmt die momentan geforderte Verdichterleistung (52) und
- ein inverses Verdichtermodell (64) bestimmt einen von dem elektrisch angetriebenen Verdichter zu erzeugenden Druck (PRS_BOOST_SP), in dem Fall, in dem die geforderte Verdichterleistung größer als die verfügbare Turbinenleistung des Abgasturboladers ist,
- eine Ladedruckregelung (69) bestimmt unter Verwendung des **durch** den elektrisch angetriebenen Verdichter zu erzeugenden Drucks die erforderlichen Leistungen von Turbine des Abgasturboladers und elektrisch angetriebenem Verdichter,
- eine Steuerung (86) für den elektrisch angetriebenen Verdichter steuert diesen entsprechend der angeforderten Leistung an,
- wobei die Ladedruckregelung (69) in dem Fall, in dem der elektrisch angetriebene Verdichter zugeschaltet ist, die Turbine mit Maximalleistung ansteuert und den Ladedruck über die Einstellung der Leistung des elektrisch angetriebenen Verdichters steuert.

2. Verfahren nach Anspruch 1, **dadurch gekennzeichnet, daß** die Ladedruckregelung jeweils ein PID-Regler (90, 100) für die Turbine des Abgasturboladers und für den elektrisch angetriebenen Verdichter besitzt.

3. Verfahren nach Anspruch 2, **dadurch gekennzeichnet, daß** die Ladedruckregelung die Sollwerte für die Turbinenleistung und für die Leistung des elektrisch angetriebenen Verdichters bestimmt, sowie ein Signal dafür, ob der elektrisch angetriebene Verdichter zugeschaltet ist.

4. Verfahren nach einem der Ansprüche 1 bis 3, **dadurch gekennzeichnet, daß** das Turbinenmodell die momentan verfügbare Turbinenleistung (POW_TUR_MAX) abhängig von dem Abgasmassenstrom aus dem Motor (FLOW_ENG) der Turbinendrehzahl (N_TCHA) und einer Abgastemperatur vor der Turbine (TEG_TUR_UP) bestimmt.

5. Verfahren nach einem der Ansprüche 1 bis 4, **dadurch gekennzeichnet, daß** das Verdichtermodell (48) die Sollwerte für die momentan geforderte Leistung des elektrisch angetriebenen Verdichters (50) und der Turbine (52) bestimmt.

6. Verfahren nach Anspruch 5, **dadurch gekennzeichnet, daß** das Verdichtermodell die Sollwerte für den elektrisch angetriebenen Verdichter und Turbine abhängig von dem Luftmassenstrom (MAF), dem Umgebungsdruck (AMP), der Ansauglufttemperatur vor Verdichter (TIA_CHA_UP), der maximalen Verdichterleistung (POW_CHA_MAX) und dem momentanen Ladedruck (PUT) bestimmt.

7. Verfahren nach Anspruch 6, **dadurch gekennzeichnet, daß** als Luftmassenstrom der Sollwert für den Luftmassenstrom verwendet wird.

8. Verfahren nach Anspruch 6 oder 7, **dadurch gekennzeichnet, daß** als Ladedruck der Sollwert für den momentanen Ladedruck (PUT_SP) verwendet wird.

9. Verfahren nach einem der Ansprüche 1 bis 8, **dadurch gekennzeichnet, daß** das inverse Verdichtermodell für den elektrisch angetriebenen Verdichter abhängig von dem Druck-Sollwert des elektrisch angetriebenen Verdichters (PRS_BOOST_SP), dem Umgebungsdruck (AMP), dem Luftmassenstrom (MAF) und der Ansauglufttemperatur vor dem elektrisch angetriebenen Verdichter (TIA_BOOST_UP) den Sollwert für die Leistung des elektrisch angetriebenen Verdichters (POW_BOOST_UP) bestimmt wird.

10. Verfahren nach Anspruch 9, **dadurch gekennzeichnet, daß** das inverse Verdichtermodell als Sollwert für den Luftmassenstrom den Sollwert für den momentanen Ladedruck verwendet.

11. Verfahren nach einem der Ansprüche 1 bis 10, **dadurch gekennzeichnet, daß** zusätzlich ein inverses Turbinenmodell (80) vorgesehen ist, das den Sollwert für den Druckquotienten über der Turbine (PQ_EX_SP) und den Sollwert für den Abgasmassenstrom durch die Turbine (FLOW_TUR_SP) bestimmt.

12. Verfahren nach Anspruch 11, **dadurch gekennzeichnet, daß** das inverse Turbinenmodell seine Ausgangsgrößen abhängig von dem Sollwert für die Turbinenleistung (POW_TUR_SP), der Turbinendrehzahl (N_TCHA), der Abgastemperatur vor der Turbine (TEG_TUR_UP) und dem Sollwert für die Turbinenleistung (POW_TUR_SP) bestimmt sowie davon, ob der elektrisch angetriebene Verdichter zugeschaltet ist oder nicht.

13. Verfahren nach einem der Ansprüche 1 bis 12, **dadurch gekennzeichnet, daß** als elektrisch angetriebener Verdichter ein E-Booster vorgesehen ist, der stromaufwärts oder stromabwärts von der Turbine des Abgasturboladers angeordnet ist.

## Claims

1. Method for controlling an electrically driven compressor (12) in a internal combustion engine with an exhaust gas turbocharger (18, 32), **characterized by** the following procedural steps:
- a turbine model (38) determines a turbine power instantaneously available (POW_TUR_MAX),
- a compressor model (48) determines the compressor power (50, 52) instantaneously required, and
- in the case in which the required compressor power is greater than the available turbine power of the exhaust gas turbocharger, a pressure (PRS_BOOST_SP) to be generated by an electrically driven compressor is determined in an inverse compressor model (64),
- a charge pressure control (69) determines, using the pressure to be generated by the electrically driven compressor, the required powers of the turbines of the exhaust gas turbocharger and the electrically driven compressor,
- a control (86) for the electrically driven compressor controls the latter in accordance with the power required.
- whereby, in the case in which the electrically driven compressor is connected, the charge pressure control (69) activates the turbine with the maximum power and controls the charge pressure by adjusting the power of the electrically driven compressor.

2. Method in accordance with claim 1, **characterized in that** the charge pressure control has a PID regulator (90, 100) for the turbine of the exhaust gas turbocharger and the electrically driven compressor respectively.

3. Method in accordance with claim 2, **characterized in that** the charge pressure control determines the setpoint values for the turbine power and for the power of the electrically driven compressor, as well as a signal indicating whether the electrically driven compressor is connected.

4. Method in accordance with one of the claims 1 to 3, **characterized in that** the turbine model determines in turbine power instantaneously available (POW_TUR_MAX) depending on the exhaust mass flow from the engine (FLOW_ENG) the turbine speed (N_TCHA) and an exhaust gas temperature before the turbine (TEG_TUR_UP).

5. Method in accordance with one of the claims 1 to 4, **characterized in that** the compressor model (48) determines the setpoint values for the instantaneously required power of the electrically driven compressor (50) and the turbine (52).

6. Method in accordance with claim 5, **characterized in that**, the compressor model determines the setpoint values for the electrically driven compressor and turbine depending on the mass air flow (MAF), the ambient pressure (AMP), the inlet air temperature before the compressor (TIA_CHA_UP), the maximum compressor power (POW_CHA_MAX) and current charge pressure (PUT).

7. Method in accordance with claim 6, **characterized in that** the setpoint value for the mass air flow is used as the mass air flow.

8. Method in accordance with claim 6 or 7, **characterized in that** the setpoint value for the current charge pressure (PUT_SP) is used as the charge pressure.

9. Method in accordance with one of the claims 1 to 8, **characterized in that** the inverse compressor model for the electrically driven compressor is determined depending on the required pressure value of the electrically driven compressor (PRS_BOOST_SP), the ambient pressure (AMP), the mass air flow (MAF) and the inlet air temperature before the electrically driven compressor (TIA_BOOST_UP) the setpoint value for the power of the electrically driven compressor (POW_BOOST_UP).

10. Method in accordance with claim 9, **characterized in that** the inverse compressor model of the electrically driven compressor uses the setpoint value for the mass air flow as mass air flow.

11. Method in accordance with one of the claims 1 to 10, **characterized in that**, in addition an inverse turbine model (80) is provided which determines the setpoint value for the pressure quotients over the turbine (PQ_EX_SP) and the setpoint values for the exhaust mass flow through the turbine (FLOW_TUR_SP).

12. Method in accordance with claim 11, **characterized in that** the inverse turbine model determines its output variables depending on the setpoint value for the turbine power (POW_TUR_SP), the turbine speed (N_TCHA), the exhaust gas temperature before the turbine (TEG_TUR_UP) and the setpoint value for the turbine power (POW_TUR_SP) as well as by whether the electrically driven compressor is connected or not.

13. Method in accordance with one of the claims 1 to 12, **characterized in that** an e-booster is provided as electrically driven compressor which is arranged downstream or upstream of the turbine of the exhaust gas turbocharger.

## Revendications

1. Procédé pour piloter un compresseur à entraînement électrique (12) inclus dans un moteur à combustion interne qui comporte un turbocompresseur sur gaz d'échappement (18, 32), **caractérisé par** les étapes de procédé suivantes:
- un modèle de turbine (38) détermine une puissance de la turbine actuellement disponible (POW_TUR_MAX),
- un modèle de compresseur (48) détermine la puissance de compresseur (52) demandée actuellement et
- un modèle inverse de compresseur (64) détermine une pression (PRS_BOOST_SP) qui devra être produite par le compresseur à entraînement électrique dans le cas où la puissance de compresseur demandée est supérieure à la puissance de la turbine du turbocompresseur sur gaz d'échappement qui est disponible,
- une régulation de pression de suralimentation (69) détermine, en utilisant la pression qui devra être produite par le compresseur à entraînement électrique, les puissances de la turbine de turbocompresseur sur gaz d'échappement et du compresseur à entraînement électrique qui sont nécessaires,
- une commande (86) pour le compresseur à entraînement électrique pilote ce dernier en fonction de la puissance demandée,
- la régulation de la pression de suralimentation (69), dans le cas où le compresseur à entraînement électrique est mis en circuit, pilote la turbine avec la puissance maximum et commande la pression de suralimentation par le réglage de la puissance du compresseur à entraînement électrique.

2. Procédé selon la revendication 1, **caractérisé en ce que** la régulation de la pression de suralimentation possède des régulateurs PID (90, 100) pour la turbine du turbocompresseur sur gaz d'échappement et pour le compresseur à entraînement électrique.

3. Procédé selon la revendication 2, **caractérisé en ce que** la régulation de la pression de suralimentation détermine les valeurs de consigne pour la puissance de la turbine et pour la puissance du compresseur à entraînement électrique, ainsi qu'un signal pour indiquer si le compresseur à entraînement électrique est mis en circuit.

4. Procédé selon une des revendications 1 à 3, **caractérisé en ce que** le modèle de turbine détermine la puissance de la turbine actuellement disponible (POW_TUR_MAX) en fonction du débit massique de gaz d'échappement sortant du moteur (FLOW_ENG), de la vitesse de rotation de la turbine (N_TCHA) et d'une température des gaz d'échappement en amont de la turbine (TEG_TUR_UP).

5. Procédé selon une des revendications 1 à 4, **caractérisé en ce que** le modèle de compresseur (48) détermine les valeurs de consigne pour la puissance du compresseur à entraînement électrique (50) et de la turbine (52) qui est demandée actuellement.

6. Procédé selon la revendication 5, **caractérisé en ce que** le modèle de compresseur détermine les valeurs de consigne pour le compresseur à entraînement électrique et pour la turbine en fonction du débit massique d'air (MAF), de la pression ambiante (AMP), de la température de l'air d'admission en amont du compresseur (TIA_CHA_UP), de la puissance maximum du compresseur (POW_CHA_MAX) et de la pression de suralimentation actuelle (PUT).

7. Procédé selon la revendication 6, **caractérisé en ce qu'**on utilise comme débit massique d'air la valeur de consigne pour le débit massique d'air.

8. Procédé selon la revendication 6 ou 7, **caractérisé en ce qu'**on utilise comme pression de suralimentation la valeur de consigne pour la pression de suralimentation actuelle (PUT_SP).

9. Procédé selon une des revendications 1 à 8, **caractérisé en ce que** le modèle inverse de compresseur pour le compresseur à entraînement électrique détermine la valeur de consigne pour la puissance du compresseur à entraînement électrique (POW_BOOST_UP) en fonction de la valeur de consigne de la pression du compresseur à entraînement électrique (PRS_BOOST_SP), de la pression ambiante (AMP), du débit massique d'air (MAF) et de la température de l'air d'admission en amont du compresseur à entraînement électrique (TIA_BOOST_UP).

10. Procédé selon la revendication 9, **caractérisé en ce que** le modèle inverse de compresseur utilise comme valeur de consigne pour le débit massique d'air la valeur de consigne pour la pression de suralimentation actuelle.

11. Procédé selon une des revendications 1 à 10, **caractérisé en ce qu'**en supplément, il est prévu un modèle inverse de turbine (80) qui détermine la valeur de consigne pour le quotient des pressions régnant de part et d'autre de la turbine (PQ_EX_SP) et la valeur de consigne pour le débit massique de gaz d'échappement traversant la turbine (FLOW_TUR_SP).

12. Procédé selon la revendication 11, **caractérisé en ce que** le modèle inverse de turbine détermine ses grandeurs de sortie en fonction de la valeur de consigne pour la puissance de la turbine (POW_TUR_SP), de la vitesse de rotation de la turbine (N_TCHA), de la température des gaz d'échappement en amont de la turbine (TEG_TUR_UP) et de la valeur de consigne pour la puissance de turbine (POW_TUR_SP), ainsi qu'en fonction du fait que le compresseur à entraînement électrique est mis en circuit ou ne l'est pas.

13. Procédé selon une des revendications 1 à 12, **caractérisé en ce qu'**il est prévu comme compresseur à entraînement électrique un surpresseur électrique qui est agencé en amont ou en aval de la turbine du turbocompresseur sur gaz d'échappement.
